# FASCICULE DE BREVET EUROPEEN

(11) **EP 2 553 230 B1**
(45) Date de publication et mention de la délivrance du brevet: **26.12.2018**
(21) Numéro de dépôt: 11712984.1
(22) Date de dépôt: 10.03.2011
(51) Int. Cl.: F02M 26/15, F01N 9/00, F02D 41/02, F02M 41/00, F02B 29/04

(54) **PROCÉDÉ DE RÉGÉNÉRATION D'UN FILTRE À PARTICULES**
VERFAHREN ZUR ERZEUGUNG EINES PARTIKELFILTERS
METHOD OF REGENERATING A PARTICLE FILTER

(30) Priorité: 01.04.2010 FR 1001369
(43) Date de publication de la demande: 06.02.2013
(73) Titulaire: Renault S.A.S., 92100 Boulogne-Billancourt (FR)
(72) Inventeur: OTMANE, Ali, 78600 Montesson (FR); PASCAL, Cedric, 91800 Brunoy (FR); LEITE, Hernani, 91320 Wissous (FR); CLEMENT, Aurelien, 91580 Etréchy (FR)
(86) Numéro de dépôt international: PCT/FR2011/050485
(87) Numéro de publication internationale: WO 2011/121201

(56) Documents cités:
- EP-A2- 1 420 159
- FR-A1- 2 878 572
- FR-A1- 2 928 410

## Description

La présente invention concerne de manière générale la réduction des émissions polluantes des véhicules automobiles et plus précisément la réduction des émissions d'oxydes d'azote des moteurs à combustion interne lors des phases de régénération de leurs filtres à particules.

Elle concerne plus particulièrement un moteur à combustion interne comprenant au moins un cylindre, une ligne d'admission d'air frais dans le cylindre, une ligne d'échappement de gaz brûlés hors du cylindre qui est équipée d'un filtre à particules, et une ligne de recirculation de gaz de recirculation qui est équipée d'une vanne de régulation du débit de gaz brûlés prélevés dans la ligne d'échappement pour être réintroduits dans la ligne d'admission.

Elle concerne également un procédé de régénération d'un filtre à particules d'un tel moteur, au cours duquel il est prévu :
a) une étape d'acquisition de la valeur d'au moins un paramètre caractéristique du fonctionnement du moteur à combustion interne,
b) une étape de comparaison de chaque valeur acquise à l'étape a) avec au moins une valeur seuil correspondante, et
c) une étape de pilotage de ladite vanne de régulation en position ouverte ou fermée selon le résultat de la comparaison effectuée à l'étape b).

### ARRIERE-PLAN TECHNOLOGIQUE

On recherche actuellement, dans un cadre législatif toujours plus contraignant et dans un souci de préservation de l'environnement, des solutions techniques permettant d'améliorer le fonctionnement des moteurs à combustion interne, notamment pour réduire le taux de polluants rejetés dans l'atmosphère.

Pour réduire ses émissions polluantes, un moteur à combustion interne comporte généralement dans sa ligne d'échappement un convertisseur catalytique permettant de traiter les hydrocarbures imbrûlés, les oxydes d'azote et le monoxyde de carbone contenus dans les gaz blûlés, suivi d'un filtre à particules permettant de filtrer les particules solides (ou « suies ») en suspension dans les gaz brûlés.

L'accumulation de particules solides dans le filtre à particules entrave toutefois progressivement l'évacuation des gaz brûlés. Il est alors connu de régénérer le filtre à particules en brûlant à intervalles réguliers les particules solides qu'il contient. Cette régénération est généralement mise en oeuvre en injectant, à chaque cycle du moteur, un surplus de carburant dans les cylindres, de manière à accroître le taux d'hydrocarbures imbrûlés contenus dans les gaz brûlés et à provoquer ainsi une réaction d'oxydation très exothermique des hydrocarbures imbrûlés dans le convertisseur catalytique. Grâce à cette réaction, les gaz brûlés sortent du convertisseur catalytique à une température très élevée, de l'ordre de 650°C, et entrent dans le filtre à particules en brûlant les particules solides qui encombrent ce dernier.

Bien qu'efficace sur le traitement des particules solides, cette solution s'avère néanmoins peu satisfaisante puisqu'elle s'accompagne, au cours de chaque phase de régénération, d'un accroissement sensible du taux d'oxydes d'azote rejetés par le moteur dans l'atmosphère.

Le document EP1420159 décrit un moteur à combustion interne comportant deux lignes de recirculation de gaz brûlés (EGR) équipées d'une vanne, dont une première d'entre elles comporte un filtre à particules. Il y est expliqué que lorsque la température des gaz brûlés est inférieure à un seuil, seule la seconde ligne de recirculation est utilisée, et que dans le cas contraire, les deux lignes de recirculation sont utilisées.

### OBJET DE L'INVENTION

Afin de remédier à l'inconvénient précité de l'état de la technique, la présente invention propose un procédé de régénération du filtre à particules permettant de réduire sensiblement les émissions d'oxydes d'azote.

Plus particulièrement, on propose selon l'invention un procédé de régénération d'un filtre à particules tel que défini dans l'introduction, dans lequel à l'étape c) la vanne de régulation est pilotée pour présenter un taux d'ouverture invariable et prédéterminé.

Autrement formulé, lors de la régénération du filtre à particules, le taux d'ouverture de la vanne de régulation est piloté pour être soit nul, soit égal à une constante non nulle, qui ne varie pas d'une phase de régénération à l'autre. Ainsi, ce taux d'ouverture n'est en particulier pas piloté pour varier en fonction du débit d'air frais circulant dans la ligne d'admission.

En choisissant finement le taux d'ouverture prédéterminé, la demanderesse a en effet constaté qu'il était possible de réduire très fortement les émissions d'oxydes d'azote du moteur durant l'ensemble de la phase de régénération du filtre à particules, sans pour autant altérer l'efficacité de la régénération.

Un taux d'ouverture fixe et constant de la vanne de régulation permet effectivement de conserver un taux de dioxygène dans les gaz brûlés suffisant pour brûler les particules solides encombrant le filtre à particules.

La mise en oeuvre de ce procédé est enfin peu onéreuse puisqu'elle influe seulement sur les réglages du moteur et non sur son architecture.

D'autres caractéristiques avantageuses et non limitatives du procédé conforme à l'invention sont les suivantes :
- à l'étape a), on acquiert au moins le régime et la charge du moteur à combustion interne ;
- à l'étape a), on acquiert la température de l'air extérieur et/ou la pression de l'air extérieur et/ou la température d'eau du moteur à combustion interne ;
- à l'étape b), chaque valeur seuil est une constante prédéterminée.

L'invention concerne également un moteur à combustion interne tel que défini en introduction, qui comporte une unité électronique de pilotage pour piloter ladite vanne de régulation suivant un procédé tel que défini ci-dessus.

Préférentiellement, la ligne de recirculation considérée est une ligne EGR basse pression qui prend naissance dans la ligne d'échappement, en aval de la turbine, et qui débouche dans la ligne d'admission, en amont du compresseur.

En variante, la ligne de recirculation pourra être une ligne EGR haute pression qui prend naissance dans la ligne d'échappement, en amont de la turbine, et qui débouche dans la ligne d'admission, en aval du compresseur.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

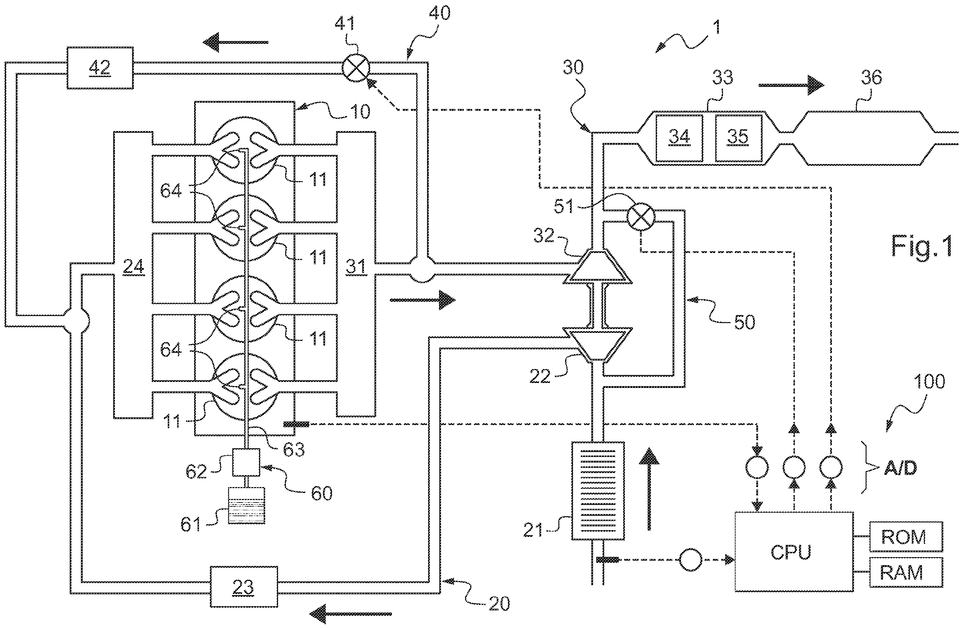

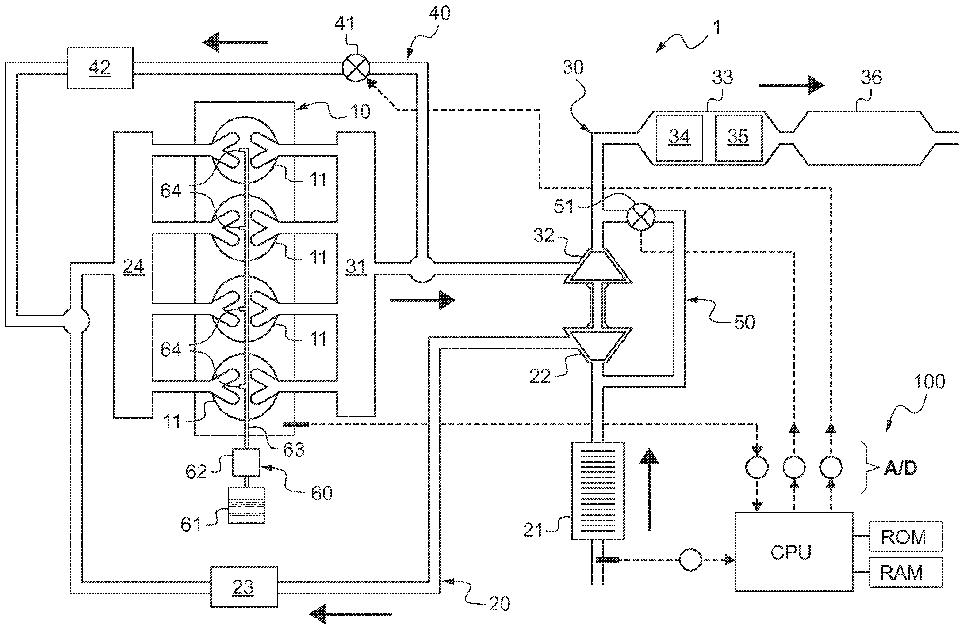

Sur les dessins annexés, la figure 1 est une vue schématique d'un moteur à combustion interne selon l'invention.

Dans la description, les termes « amont » et « aval » seront utilisés suivant le sens de l'écoulement des gaz, depuis le point de prélèvement de l'air frais dans l'atmosphère jusqu'à la sortie des gaz brûlés dans l'atmosphère.

Sur la figure 1, on a représenté schématiquement un moteur à combustion interne 1 de véhicule automobile, qui comprend un bloc-moteur 10 pourvu d'un vilebrequin et de quatre pistons (non représentés) logés dans quatre cylindres 11.

Ce moteur est ici à allumage par compression (Diesel). Il pourrait également être à allumage commandé (Essence).

En amont des cylindres 11, le moteur à combustion interne 1 comporte une ligne d'admission 20 pourvue d'un filtre à air 21 qui filtre l'air frais prélevé dans l'atmosphère. Cette ligne d'admission 20 comporte en outre un compresseur 22 qui comprime l'air frais filtré par le filtre à air 21, ainsi qu'un refroidisseur d'air principal 23 qui refroidit cet air frais comprimé. La ligne d'admission 20 débouche dans un répartiteur d'air 24 qui amène l'air frais dans chacun des cylindres 11 du bloc-moteur 10.

En sortie des cylindres 11, le moteur à combustion interne 1 comporte une ligne d'échappement 30 de gaz brûlés. Cette ligne d'échappement 30 comporte un collecteur d'échappement 31 dans lequel débouchent les gaz qui ont été préalablement brûlés dans les cylindres 11. Cette ligne d'échappement 30 s'étend jusqu'à un silencieux d'échappement 36. La ligne d'échappement 30 comporte par ailleurs, entre le collecteur d'échappement 31 et le silencieux d'échappement 36, une turbine 32 qui est entraînée en rotation par le flux de gaz brûlés pour actionner le compresseur 22, et un pot catalytique 33 de traitement des gaz brûlés. Ce pot catalytique 33 renferme ici un catalyseur d'oxydation 34 et un filtre à particules 35.

Le moteur à combustion interne 1 comporte également ici une ligne de recirculation haute pression 40, appelée ligne EGR-HP, qui prend naissance dans la ligne d'échappement 30, entre le collecteur d'échappement 31 et la turbine 32, et qui débouche dans la ligne d'admission 20, entre le refroidisseur d'air principal 23 et le répartiteur d'air 24. Cette ligne EGR-HP 40 permet de prélever une partie des gaz brûlés circulant dans la ligne d'échappement 30, appelés gaz EGR-HP, pour la réinjecter dans les cylindres 11 afin de réduire les émissions polluantes du moteur, et en particulier les émissions d'oxydes d'azote. Cette ligne EGR-HP 40 comporte une vanne de régulation 41 du débit de gaz EGR-HP, appelée vanne EGR-HP, et un refroidisseur secondaire 42 pour refroidir les gaz EGR-HP.

Le moteur à combustion interne 1 comporte aussi une ligne de recirculation basse pression 50, appelée ligne EGR-BP, qui prend naissance dans la ligne d'échappement 30, entre la turbine 32 et le pot catalytique 33, et qui débouche dans la ligne d'admission 20, entre le filtre à air 21 et le compresseur 22. Cette ligne EGR-BP 50 permet également de prélever une partie des gaz brûlés circulant dans la ligne d'échappement 30, appelés gaz EGR-BP. Elle comporte une vanne de régulation 51 du débit de gaz EGR-BP, appelée vanne EGR-BP.

Le moteur à combustion interne 1 comporte par ailleurs une ligne d'injection 60 de carburant dans les cylindres 11. Cette ligne d'injection 60 comporte un réservoir 61 de carburant, une pompe d'injection 62 agencée pour prélever le carburant dans le réservoir 61 afin de le comprimer, et un rail de distribution 63 permettant de répartir ce carburant vers quatre injecteurs 64 débouchant respectivement dans les quatre cylindres 11.

Pour piloter les différents organes du moteur à combustion interne 1 et notamment les vannes EGR-HP 41 et EGR-BP 51, il est prévu un calculateur 100 comportant un processeur (CPU), une mémoire vive (RAM), une mémoire morte (ROM), des convertisseurs analogiques-numériques (A/D), et différentes interfaces d'entrée et de sortie.

Grâce à ses interfaces d'entrée, le calculateur 100 est adapté à recevoir de différents capteurs des signaux d'entrée relatifs au fonctionnement du moteur et aux conditions climatiques.

Dans sa mémoire vive, le calculateur 100 mémorise ainsi en continu :
- la charge C instantanée du moteur à combustion interne 1,
- le régime R instantanée du moteur à combustion interne 1,
- la température d'eau Te du moteur à combustion interne 1,
- la différence de pression DP entre la sortie et l'entrée du filtre à particules 35,
- la température ambiante Ta, c'est-à-dire la température à l'extérieur du véhicule, et
- la pression ambiante Pa.

La charge C correspond au rapport du travail fourni par le moteur sur le travail maximal que pourrait développer ce moteur à un régime donné. Elle est généralement approximée à l'aide d'une variable appelée pression moyenne effective PME.

Grâce à une cartographie prédéterminée sur banc d'essais et mémorisée dans sa mémoire morte, le calculateur 100 est adapté à générer, pour chaque condition de fonctionnement du moteur, des signaux de sortie.

Enfin, grâce à ses interfaces de sortie, le contrôleur est adapté à transmettre ces signaux de sortie aux différents organes du moteur, notamment aux vannes EGR-HP 41 et EGR-BP 51.

Classiquement, lorsque le conducteur du véhicule automobile met le contact, le calculateur 100 s'initie puis commande le démarreur et les injecteurs de carburant 64 pour que ceux-ci démarrent le moteur.

Lorsque le moteur est démarré, l'air frais prélevé dans l'atmosphère par la ligne d'admission 20 est filtré par le filtre à air 21, comprimé par le compresseur 22, refroidi par le refroidisseur d'air principal 23, puis brûlé dans les cylindres 11.

A leur sortie des cylindres 11, les gaz brûlés sont détendus dans la turbine 32, traités et filtrés dans le pot catalytique 33, puis détendus à nouveau dans le silencieux d'échappement 34 avant d'être rejetés dans l'atmosphère.

Le calculateur 100 acquiert par ailleurs en continu la différence de pressions DP entre la sortie et l'entrée du filtre à particules 35.

Tant que cette différence de pressions DP reste inférieure à un seuil prédéterminé, qui signifie que le filtre à particules est peu chargé en particules solides, le calculateur 100 pilote les injecteurs de carburant 64 suivant un mode de fonctionnement normal.

Durant cette période, le taux de chargement du filtre à particules 35 augmente peu à peu, de sorte que la différence de pressions DP croît progressivement.

Lorsque la différence de pressions DP entre la sortie et l'entrée du filtre à particules 35 dépasse un seuil critique et que les conditions de régénération de ce filtre (inhérentes aux conditions de fonctionnement du moteur) sont réunies, le calculateur 100 pilote les injecteurs de carburant 64 suivant un mode de fonctionnement distinct du mode normal, appelé mode de régénération.

Durant ce mode, le calculateur 100 pilote les injecteurs de carburant 64 pour qu'à chaque cycle de fonctionnement du moteur, ils injectent un surplus de carburant destiné à ne pas être brulé dans les cylindres. Ce surplus de carburant génère un fort accroissement du taux d'hydrocarbures imbrûlés HC contenus dans les gaz brûlés circulant dans la ligne d'échappement 30. Ces hydrocarbures imbrûlés HC provoquent ainsi dans le catalyseur d'oxydation 34 une réaction d'oxydation très exothermique, qui permet aux gaz brûlés d'entrer dans le filtre à particules 35 avec une température très élevée, de l'ordre de 650 degrés Celsius.

Au cours de cette phase de régénération, la vanne EGR-HP 41 est pilotée en position fermée. La vanne EGR-BP 51 est quant à elle pilotée en position ouverte ou fermée, selon les conditions de fonctionnement du moteur.

Pour piloter cette vanne EGR-BP 51, le calculateur 100 met alors en oeuvre un procédé décomposable en trois étapes principales.

Au cours d'une première étape a) d'acquisition, le calculateur 100 acquiert la valeur d'au moins un paramètre caractéristique du fonctionnement du moteur à combustion interne 1.

Le calculateur 100 acquiert ici en continu la charge C, le régime R et la température d'eau Te du moteur ainsi que la température ambiante Ta et la pression ambiante Pa.

Au cours d'une seconde étape b) de comparaison, le calculateur 100 compare chaque valeur acquise à l'étape a) avec au moins une valeur seuil correspondante.

Il compare plus précisément :
- le régime R acquis à l'étape a) avec deux valeurs seuils VR, par exemple 1000 et 3500 tours par minutes ;
- la charge C acquise à l'étape a) avec deux valeurs seuils VC, par exemple 50 et 250 N.m ;
- la température ambiante Ta acquise à l'étape a) avec deux valeurs seuils VTa, par exemple 5 et 40 degrés Celsius ;
- la pression ambiante Pa acquise à l'étape a) avec une valeur seuil VPa, par exemple 900 hPa ; et
- la température d'eau Te acquise à l'étape a) avec une valeur seuil VTe, par exemple 70 degrés Celsius.

Au cours d'une troisième étape c) de pilotage, le calculateur 100 pilote la vanne EGR-BP 51 en position ouverte ou fermée selon le résultat de la comparaison de l'étape b).

Il pilote plus précisément la vanne EGR-BP 51 en position ouverte si le régime R est compris entre ses deux valeurs seuils VR, si la charge C est comprise entre ses deux valeurs VC, si la température ambiante Ta est comprise entre ses deux valeurs seuils VTa, si la pression ambiante Pa est supérieure à sa valeur seuil VPa, et si la température d'eau Te est supérieure à sa valeur seuil Vte. Il pilote sinon la vanne EGR-BP 51 en position fermée.

Selon une caractéristique particulièrement avantageuse de l'invention, à l'étape c), la vanne EGR-BP 51 est pilotée pour présenter un taux d'ouverture Tx soit nul, soit égal à une constante non nulle qui est invariable et prédéterminée. De cette manière, tant qu'elle est pilotée en position ouverte, la vanne EGR-BP 51 présente une position invariable. Sa position est d'ailleurs identique d'une phase de régénération à l'autre.

Ce taux d'ouverture Tx est inférieur à 40 %. Il est, suivant l'architecture du moteur, compris entre 10 % et 30 %. Il est préférentiellement prédéterminé de telle sorte que le rapport du volume de gaz brûlés entrant dans les cylindres 11 sur le volume total de gaz entrant dans les cylindres 11 soit toujours inférieur à 10 %. Selon le besoin, ce rapport pourra cependant être supérieur à ce seuil.

Le taux d'ouverture Tx doit en effet être suffisamment élevé pour que la recirculation des gaz brûlés ait un effet sensible sur le taux d'oxydes d'azote Nox rejetés par le moteur dans l'atmosphère durant les phases de régénération du filtre à particules 35. Il doit toutefois ne pas être trop élevé pour que le taux de dioxygène présent dans les gaz brûlés reste suffisant pour brûler efficacement les particules solides retenues dans le filtre à particules 35.

Le taux d'ouverture Tx de la vanne EGR-BP 51 est par exemple choisi égal à 20 %, ce qui permet une réduction de 30% du taux d'oxydes d'azote Nox rejetés par le moteur, par rapport à une configuration dans laquelle la vanne EGR-BP 51 resterait fermée.

La présente invention n'est nullement limitée aux modes de réalisation décrits et représentés, mais l'homme du métier saura y apporter toute variante conforme à son esprit.

En particulier, à l'étape c), on pourra prévoir que la vanne EGR-BP reste constamment fermée durant la phase de régénération du filtre à particules, et que la vanne EGR-HP soit pilotée en position fermée ou ouverte avec un taux d'ouverture prédéterminé, selon les conditions de fonctionnement du moteur.

On pourra également prévoir que le moteur ne comporte qu'une seule ligne de recirculation des gaz brûlées, haute pression ou basse pression, auquel cas la vanne EGR de cette ligne de recirculation sera pilotée en position fermée ou ouverte avec un taux d'ouverture prédéterminé, selon les conditions de fonctionnement du moteur.

Selon une variante, à l'étape c), on pourra piloter la vanne EGR en fonction de paramètres supplémentaires relatifs au fonctionnement du moteur, ou en fonction de paramètres autres que le régime et la charge du moteur. On pourra par exemple piloter la vanne en fonction uniquement de la température d'eau du moteur.

Encore en variante, on pourra prévoir provoquer la régénération du filtre à particules, non pas en injectant un surplus de carburant dans les cylindres, mais plutôt en injectant un réducteur (typiquement du carburant) directement dans ligne échappement, à l'aide d'une ligne d'injection ad hoc.

## Revendications

1. Procédé de régénération d'un filtre à particules (35) d'un moteur à combustion interne (1) comprenant au moins un cylindre (11), une ligne d'admission (20) d'air frais dans le cylindre (11), une ligne d'échappement (30) de gaz brûlés hors du cylindre (11) équipée dudit filtre à particules (35), et une ligne de recirculation (40, 50) de gaz de recirculation équipée d'une vanne de régulation (41, 51) du débit de gaz brûlés prélevés dans ladite ligne d'échappement (30) et réintroduits dans ladite ligne d'admission (20), au cours duquel il est prévu :
a) une étape d'acquisition d'une valeur d'au moins un paramètre (R, C) caractéristique du fonctionnement du moteur à combustion interne (1),
b) une étape de comparaison de chaque valeur (R, C) acquise à l'étape a) avec au moins une valeur seuil (VR, VC) correspondante, et
c) une étape de pilotage de ladite vanne de régulation (41, 51) en position ouverte ou fermée selon le résultat de la comparaison de l'étape b),
**caractérisé en ce qu'**à l'étape c) la vanne de régulation (41, 51) est pilotée pour présenter un taux d'ouverture (Tx) soit nul, soit égal à une constante non nulle, qui est invariable et prédéterminée de telle sorte qu'elle ne varie pas d'une phase de régénération à l'autre.

2. Procédé de régénération selon la revendication précédente, dans lequel, à l'étape a), on acquiert au moins le régime (R) et la charge (C) du moteur à combustion interne (1).

3. Procédé de régénération selon l'une des revendications précédentes, dans lequel, à l'étape a), on acquiert la température (Ta) de l'air extérieur et/ou la pression (Pa) de l'air extérieur et/ou la température d'eau (Te) du moteur à combustion interne (1).

4. Procédé de régénération selon l'une des revendications précédentes, dans lequel, à l'étape b), chaque valeur seuil (VR, VC) est une constante prédéterminée.

5. Moteur à combustion interne (1) comportant :
- au moins un cylindre (11),
- une ligne d'admission (20) d'air frais dans le cylindre (11),
- une ligne d'échappement (30) de gaz brûlés hors du cylindre (11) qui est équipée d'un filtre à particules (35), et
- une ligne de recirculation (40, 50) de gaz de recirculation qui est équipée d'une vanne de régulation (41, 51) du débit de gaz brûlés prélevés dans ladite ligne d'échappement (30) et réintroduits dans ladite ligne d'admission (20),
**caractérisé en ce qu'**il comporte une unité électronique de pilotage (100) pour piloter ladite vanne de régulation (41, 51) suivant un procédé tel que défini dans l'une des revendications précédentes.

6. Moteur à combustion interne (1) selon la revendication 5, dans lequel les lignes d'admission (20) et d'échappement (30) comprennent respectivement un compresseur (22) et une turbine (32) et dans lequel la ligne de recirculation (50) est une ligne basse pression qui prend naissance dans la ligne d'échappement (30), en aval dudit filtre à particules (35), et qui débouche dans la ligne d'admission (20), en amont du compresseur (22).

7. Moteur à combustion interne selon la revendication 5, dans lequel les lignes d'admission (20) et d'échappement (30) comprennent respectivement un compresseur (22) et une turbine (32) et dans lequel la ligne de recirculation (40) est une ligne haute pression qui prend naissance dans la ligne d'échappement (30), en amont de la turbine (32), et qui débouche dans la ligne d'admission (20), en aval du compresseur (22).

## Patentansprüche

1. Verfahren zur Regeneration eines Partikelfilters (35) eines Verbrennungsmotors (1), der mindestens einen Zylinder (11), eine Ansaugleitung (20) von Frischluft in den Zylinder (11), eine Auspuffleitung (30) verbrannter Gase aus dem Zylinder (11), die mit dem Partikelfilter (35) ausgestattet ist, und eine Rückführleitung (40, 50) von Rückführgasen enthält, die mit einem Regelventil (41, 51) des Durchsatzes verbrannter Gase versehen ist, die in der Auspuffleitung (30) entnommen und wieder in die Ansaugleitung (20) eingeführt werden, während dessen vorgesehen ist:
a) ein Schritt der Erfassung eines Werts mindestens eines für den Betrieb des Verbrennungsmotors (1) charakteristischen Parameters (R, C),
b) ein Schritt des Vergleichs jedes im Schritt a) erfassten Werts (R, C) mit mindestens einem entsprechenden Schwellwert (VR, VC), und
c) ein Schritt des Steuerns des Regelventils (41, 51) in die offene oder geschlossene Stellung, je nach dem Ergebnis des Vergleichs des Schritts b),
**dadurch gekennzeichnet, dass** im Schritt c) das Regelventil (41, 51) gesteuert wird, um einen Öffnungsgrad (Tx) entweder Null oder gleich einer Konstanten ungleich Null aufzuweisen, die invariabel und so vorbestimmt ist, dass sie von einer Regenerationsphase zur anderen nicht variiert.

2. Regenerationsverfahren nach dem vorhergehenden Anspruch, wobei im Schritt a) mindestens die Drehzahl (R) und die Last (C) des Verbrennungsmotors (1) erfasst werden.

3. Regenerationsverfahren nach einem der vorhergehenden Ansprüche, wobei im Schritt a) die Temperatur (Ta) der Außenluft und/oder der Druck (Pa) der Außenluft und/oder die Wassertemperatur (Te) des Verbrennungsmotors (1) erfasst werden.

4. Regenerationsverfahren nach einem der vorhergehenden Ansprüche, wobei im Schritt b) jeder Schwellwert (VR, VC) eine vorbestimmte Konstante ist.

5. Verbrennungsmotor (1), der aufweist:
- mindestens einen Zylinder (11),
- eine Ansaugleitung (20) von Frischluft in den Zylinder (11),
- eine Auspuffleitung (30) verbrannter Gase aus dem Zylinder (11), die mit einem Partikelfilter (35) ausgestattet ist, und
- eine Rückführleitung (40, 50) von Rückführgas, die mit einem Regelventil (41, 51) des Durchsatzes verbrannter Gase ausgestattet ist, die in der Auspuffleitung (30) entnommen und wieder in die Ansaugleitung (20) eingeführt werden,
**dadurch gekennzeichnet, dass** er eine elektronische Steuereinheit (100) aufweist, um das Regelventil (41, 51) gemäß einem wie in den vorhergehenden Ansprüchen definierten Verfahren zu steuern.

6. Verbrennungsmotor (1) nach Anspruch 5, wobei die Ansaug- (20) und Auspuffleitungen (30) je einen Kompressor (22) und eine Turbine (32) enthalten, und wobei die Rückführleitung (50) eine Niederdruckleitung ist, die in der Auspuffleitung (30) stromabwärts hinter dem Partikelfilter (35) beginnt und in die Ansaugleitung (20) stromaufwärts vor dem Kompressor (22) mündet.

7. Verbrennungsmotor nach Anspruch 5, wobei die Ansaug- (20) und Auspuffleitungen (30) je einen Kompressor (22) und eine Turbine (32) enthalten, und wobei die Rückführleitung (40) eine Hochdruckleitung ist, die in der Auspuffleitung (30) stromaufwärts vor der Turbine (32) beginnt und in die Ansaugleitung (20) stromabwärts hinter dem Kompressor (22) mündet.

## Claims

1. Method for regenerating a particulate filter (35) of an internal combustion engine (1) comprising at least one cylinder (11), an inlet line (20) admitting fresh air into the cylinder (11), an exhaust line (30) expelling burnt gases from the cylinder (11) and equipped with the said particulate filter (35), and an exhaust gas recirculation line (40, 50) equipped with a regulating valve (41, 51) for regulating the flow of burnt gases tapped off the said exhaust line (30) and reintroduced into the said inlet line (20), which method provides:
a) an acquisition step of acquiring a value of at least one parameter (R, C) characteristic of the operation of the internal combustion engine (1),
b) a comparison step of comparing each value (R, C) acquired in step a) with at least one corresponding threshold value (VR, VC), and
c) a control step of moving the said regulating valve (41, 51) into the open or closed position according to the result of the comparison in step b),
**characterized in that**, in step c), the regulating valve (41, 51) is operated so that it has a degree of opening (Tx) that is either zero or equal to a non-zero constant which is invariable and predetermined in such a way that it does not vary from one regeneration phase to another.

2. Regeneration method according to the preceding claim, in which, in step a), at least the speed (R) and load (C) of the internal combustion engine (1) are acquired.

3. Regeneration method according to one of the preceding claims, in which, in step a), the temperature (Ta) of the external air and/or the pressure (Pa) of the external air and/or the water temperature (Te) of the internal combustion engine (1) are acquired.

4. Regeneration method according to one of the preceding claims, in which, in step b), each threshold value (VR, VC) is a predetermined constant.

5. Internal combustion engine (1) comprising:
- at least one cylinder (11),
- an inlet line (20) admitting fresh air into the cylinder (11),
- an exhaust line (30) expelling burnt gases from the cylinder (11) and which is equipped with a particulate filter (35), and
- an exhaust gas recirculation line (40, 50) which is equipped with a regulating valve (41, 51) for regulating the flow of burnt gases tapped from the said exhaust line (30) and reintroduced into the said inlet line (20),
**characterized in that** it comprises an electronic control unit (100) for operating the said regulating valve (41, 51) according to a method as described in one of the preceding claims.

6. Internal combustion engine (1) according to Claim 5, in which the inlet (20) and exhaust (30) lines respectively comprise a compressor (22) and a turbine (32), and in which the recirculation line (50) is a low pressure line starting in the exhaust line (30) downstream of the said particulate filter (35) and opening into the inlet line (20) upstream of the compressor (22).

7. Internal combustion engine according to Claim 5, in which the inlet (20) and exhaust (30) lines respectively comprise a compressor (22) and a turbine (32) and in which the recirculation line (40) is a high-pressure line starting in the exhaust line (30) upstream of the turbine (32) and opening into the inlet line (20) downstream of the compressor (22).
